# EUROPEAN PATENT APPLICATION

(11) **EP 3 633 254 A1**
(43) Date of publication of application: **08.04.2020**
(21) Application number: 18805430.8
(22) Date of filing: 09.04.2018
(51) Int. Cl.: F16L 15/04, E02D 5/24, F16L 15/00

(54) **THREADED JOINT FOR STEEL PIPES**

(30) Priority: 25.05.2017 JP 2017103956
(71) Applicant: Nippon Steel Corporation, Tokyo 1008071 (JP); Vallourec Oil and Gas France, 59620 Aulnoye-Aymeries (FR)
(72) Inventor: OKU, Yousuke, Tokyo 100-8071 (JP)
(74) Representative: J A Kemp LLP
(86) International application number: PCT/JP2018/014903
(87) International publication number: WO 2018/216375

(57) **Abstract**

A threaded connection for steel pipe is provided that can both provide a certain torque resistance and reduce manufacturing costs. A threaded connection (1) for steel pipe includes a pin (10) including a male thread portion (11) on an outer periphery, and a box (20) including, on an inner periphery, a female thread portion (21) and adapted to be made up on the pin (10). The male thread portion (11) includes a main male thread (111) and an auxiliary male thread (112). The main male thread (111) is constituted by a trapezoidal thread having a constant thread crest width and a constant thread root width. The auxiliary male thread (112) is located on a thread root of the main male thread (111) and has a thread crest width and a thread crest height that are smaller than those of the main male thread (111). In a cross section containing a pipe axis of the pin (10), the flank angle of the stabbing flank (111c) of the main male thread (111) and the flank angle of the loading flank (112d) of the auxiliary male thread (112) at adjacent locations are larger than 0 degrees.

## Description

### TECHNICAL FIELD

The present disclosure relates to a threaded connection used to connect steel pipes.

### BACKGROUND ART

In oil wells or natural-gas wells (hereinafter collectively referred to as "oil wells" or the like), oil country tubular goods (OCTGs) such as casing and tubing are used for prospecting underground resources. An OCTG is composed of a series of steel pipes connected together by means of a threaded connection.

Such threaded connections for steel pipe are generally categorized as coupling type and integral type. A coupling-type connection connects a pair of pipes, one of which is a steel pipe and the other one is a short pipe called coupling. In this case, a male thread is provided on the outer periphery of each of the ends of the steel pipe, while a female thread is provided on the inner periphery of each of the ends of the coupling. Then, a male thread of the steel pipe is screwed into a female thread of the coupling such that the steel pipe and coupling are made up and connected. An integral-type connection connects a pair of pipes that are both steel pipes, and does not use a separate coupling. In this case, a male thread is provided on the outer periphery of one end of each steel pipe, while a female thread is provided on the inner periphery of the other end. Then, the male thread of the one steel pipe is screwed into the female thread of the other steel pipe such that these pipes are made up and connected.

A connection portion of a pipe end on which a male thread is provided includes an element to be inserted into a female thread, and thus is usually referred to as pin. A connection portion of a pipe end on which a female thread is provided includes an element for receiving a male thread, and thus is referred to as box. A pin and a box constitute ends of pipes and are thus tubular in shape.

In recent years, development of new techniques, such as horizontal drilling and directional drilling, has created demand for threaded connections with high torque resistance and high sealing performance. To provide both torque resistance and sealing performance, it is effective if the screw threads used are dovetail-shaped tapered threads, for example, which may referred to as wedge threads. In a threaded connection having wedge threads, the thread crest width of the male thread (on the pin) decreases in the direction in which a right-handed thread advances along the helix of the thread such that the thread is tapered, while the thread root width of the opposite female thread (on the box) decreases in the direction in which a right-handed thread advances along the helix of the thread such that the thread is tapered. In a wedge thread, both the loading flank and stabbing flank have negative angles, and loading flanks contact each other while stabbing flanks contact each other. Thus, the entire threads strongly engage, exhibiting high torque performance. Further, when the connection has been made up, the thread crests and thread roots of the threads are in contact with each other, thereby providing a certain sealing performance.

On the other hand, Patent Documents 1 and 2 disclose threaded connections in which torque performance is improved without using wedge threads.

In the threaded connection of Patent Document 1, a cross section of each of the loading and stabbing flanks of each thread is Z-shaped. With this threaded connection, loading flanks and stabbing flanks with such a shape are brought into contact to control the axial and radial tightening of the threads.

In the threaded connection of Patent Document 2, a cross section of each of the loading flanks of the threads is hook-shaped. Thus, when the connection has been made up, the hook-shaped loading flanks engage each other. Thus, the threads may be burdened with some of the torsional torque with which the torque shoulders are burdened, reducing plastic deformation of the torque shoulders and exhibiting high torque resistance.

The following prior art documents are incorporated herein by reference.
Patent Document 1: U.S. Patent Application Publication No. 2008/0073909 A
Patent Document 2: JP 2002-81584 A

### SUMMARY OF THE DISCLOSURE

In a threaded connection in which the threads used are wedge threads, the thread crest width of the male thread and the thread root width of the corresponding female thread change. This makes it difficult to machine the threads and prolongs machining time, resulting in high manufacturing costs. To reduce manufacturing costs, the threads used may be buttress threads (or trapezoidal threads) in accordance with the American Petroleum Institute (API) standards. However, a threaded connection using buttress threads does not exhibit high torque resistance unless a torque amplification mechanism, such as torque shoulders, is provided.

An object of the present disclosure is to provide a threaded connection for steel pipe that can both provide a certain torque resistance and reduce manufacturing costs.

A threaded connection for steel pipe according to the present disclosure includes a tubular pin and a tubular box. The pin includes a male thread portion on an outer periphery. The box includes, on an inner periphery, a female thread portion corresponding to the male thread portion and adapted to be made up on the pin. The male thread portion includes a main male thread and an auxiliary male thread. The main male thread is constituted by a trapezoidal thread having a constant thread crest width and a constant thread root width. The auxiliary male thread is located on a thread root of the main male thread and has a thread crest width and a thread crest height that are smaller than the thread crest width and the thread crest height of the main male thread. Each of the main male thread and the auxiliary male thread has a stabbing flank and a loading flank located opposite to the stabbing flank. In a cross section containing a pipe axis of the pin, a flank angle of the stabbing flank of the main male thread and a flank angle of the loading flank of the auxiliary male thread at adjacent locations are larger than 0 degrees.

The threaded connection for steel pipe according to the present disclosure reduces manufacturing costs while providing a certain torque resistance.

### BRIEF DESCRIPTION OF THE DRAWINGS

[FIG. 1] FIG. 1 is a longitudinal cross-sectional view of a threaded connection for steel pipe according to an embodiment.
[FIG. 2] FIG. 2 is a longitudinal cross-sectional view of the thread portions in the threaded connection for steel pipe shown in FIG. 1.
[FIG. 3] FIG. 3 is a longitudinal cross-sectional view of a threaded connection for steel pipe according to a conventional technique (comparative example).
[FIG. 4] FIG. 4 is a graph showing yield torque in the threaded connections for steel pipe according to an inventive example and a comparative example.
[FIG. 5] FIG. 5 is a graph showing minimum seal contact force in the threaded connections for steel pipe according to the inventive and comparative examples.

### EMBODIMENTS FOR CARRYING OUT THE INVENTION

The inventors of the threaded connection for steel pipe according to the embodiment attempted to let mainly the thread portions exhibit torque resistance starting from buttress threads (trapezoidal threads) in accordance with the API standards and varying thread shape.

A threaded connection for steel pipe according to an embodiment includes a tubular pin and a tubular box. The pin includes a male thread portion on an outer periphery. The box includes, on an inner periphery, a female thread portion corresponding to the male thread portion and adapted to be made up on the pin. The male thread portion includes a main male thread and an auxiliary male thread. The main male thread is constituted by a trapezoidal thread having a constant thread crest width and a constant thread root width. The auxiliary male thread is located on a thread root of the main male thread and has a thread crest width and a thread crest height that are smaller than the thread crest width and the thread crest height of the main male thread. Each of the main male thread and the auxiliary male thread has a stabbing flank and a loading flank located opposite to the stabbing flank. In a cross section containing a pipe axis of the pin, a flank angle of the stabbing flank of the main male thread and a flank angle of the loading flank of the male thread at adjacent locations are larger than 0 degrees.

In the male thread portion in the above-described threaded connection, an auxiliary male thread having a thread crest width and a thread crest height smaller than the main male thread is provided on the thread root of the main male thread. The female thread portion is constructed to correspond to the male thread portion. This construction will make the area of engagement between the male and female thread portions larger than that with conventional buttress threads. This will provide higher torque resistance.

Further, in the male thread portion in the above-described threaded connection, the main male thread is constituted by a trapezoidal thread with a constant thread crest width and a constant thread root width. This will allow the thread to be machined in a shorter time than a wedge thread. This will reduce manufacturing costs.

### [Embodiments]

An embodiment will be described below with reference to the drawings. The same and corresponding components in the drawings will be labeled with the same characters and the same description will not be repeated.

### (Construction of Threaded Connection for Steel Pipe)

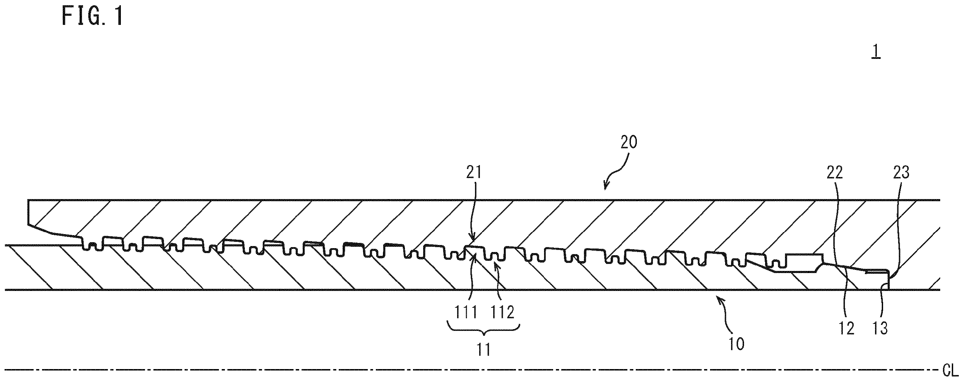

FIG. 1 is a longitudinal cross-sectional view of a threaded connection 1 for steel pipe according to the present embodiment (cross-sectional view taken on a plane containing the pipe axis CL). The threaded connection 1 may be an integral-type threaded connection, or may be a coupling-type threaded connection. The threaded connection 1 includes a pin 10 and a box 20.

The pin 10 includes a male thread portion 11, a sealing surface 12, and a shoulder surface 13. The male thread portion 11 includes a main male thread 111 and an auxiliary male thread 112. The male thread portion 11 and sealing surface 12 are provided on the outer periphery of the pin 10. The sealing surface 12 is located closer to the tip of the pin 10 than the male thread portion 11 is. The shoulder surface 13 is provided on the tip of the pin 10.

The box 20 includes a female thread portion 21, a sealing surface 22, and a shoulder surface 23. The female thread portion 21, sealing surface 22 and shoulder surface 23 are provided to correspond to the male thread portion 11, sealing surface 12 and shoulder surface 13 of the pin 10.

The male thread portion 11 and female thread portion 21 are fitted into each other when the connection has been made up to form an interference fit.

The sealing surfaces 12 and 22 come into contact with each other as the pin 10 is screwed into the box 20, are fitted into each other when the connection has been made up to form an interference fit. Thus, the sealing surfaces 12 and 22 form a seal by a metal-to-metal contact.

As the pin 10 is screwed into the box 20, the shoulder surfaces 13 and 23 come into contact with each other and are pressed against each other. The shoulder surfaces 13 and 23 limit screw-in of the pin 10 into the box 20, and gives the male thread portion 11 a load in a direction opposite to the direction of advancement of screw-in, i.e. a thread-tightening axial force.

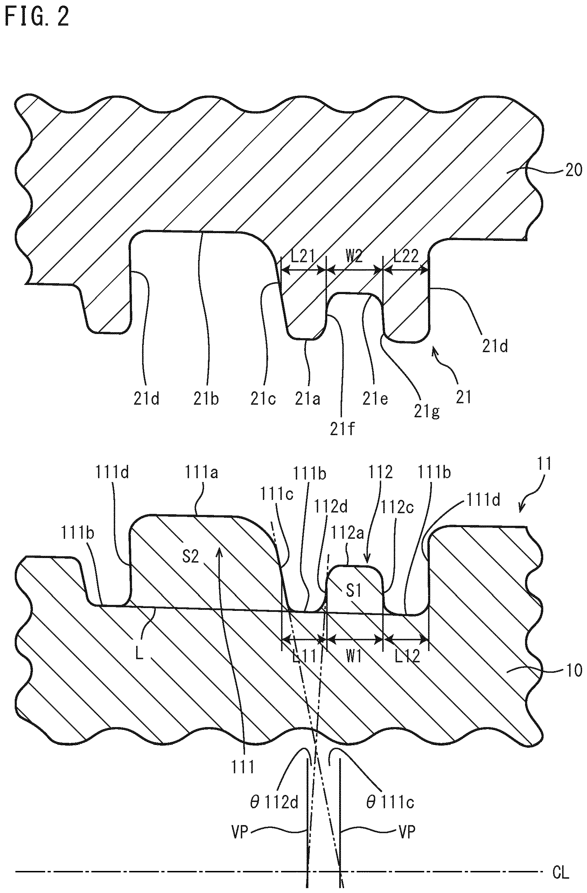

FIG. 2 is a longitudinal cross-sectional view of the thread portions in the threaded connection 1 (cross-sectional view taken on a plane containing the pipe axis CL). For ease of explanation, FIG. 2 separately shows the male thread portion 11 and the female thread portion 21.

As discussed above, the male thread portion 11 includes a main male thread 111 and an auxiliary male thread 112. The main male thread 111 is constituted by a trapezoidal thread that has a thread crest width and thread root width that are constant over the entire male thread portion 11. In a longitudinal cross section, the main male thread 111 includes a plurality of thread crest surfaces 111a, a plurality of thread root surfaces 111b, a plurality of stabbing flanks 111c, and a plurality of loading flanks 111d. Each stabbing flank 111c is located toward the tip of the pin 10. For each thread tooth of the main male thread 111, the loading flank 111d is located on the side of the thread that is opposite to the stabbing flank 111c.

Each stabbing flank 111c and each loading flank 111d of the main male thread 111 are inclined toward the same direction. More specifically, the flank angle of each stabbing flank 111c is larger than 0 degrees, i.e. is a positive angle. The flank angle of each loading flank 111d is slightly smaller than 0 degrees, i.e. is a negative angle. Flank angle as used herein means the angle formed by a plane VP perpendicular to the pipe axis CL and the stabbing flank 111c or loading flank 111d. In FIG. 2, the flank angle of each stabbing flank 111c is determined to be positive if it is a positive counterclockwise angle, while the flank angle of each loading flank 111d is determined to be positive if it is a positive clockwise angle.

The auxiliary male thread 112 is provided on the thread root of the main male thread 111. That is, in a longitudinal cross section, each thread tooth of the auxiliary male thread 112 is provided between thread teeth of the main male thread 111. The auxiliary male thread 112 has a thread crest width and thread crest height that are smaller than the thread crest width and thread crest height of the main male thread 111. For example, the longitudinal cross-sectional area of a thread tooth of the auxiliary male thread 112 is not larger than 50 % of the longitudinal cross-sectional area of a thread tooth of the main male thread 111.

In a longitudinal cross section, the auxiliary male thread 112 includes a plurality of thread crest surfaces 112a, a plurality of stabbing flanks 112c, and a plurality of loading flanks 112d. Each stabbing flank 112c is located toward the tip of the pin 10. For each thread tooth of the auxiliary male thread 112, the loading flank 112d is located on the side of the thread that is opposite to the stabbing flank 112c. Each stabbing flank 112c of the auxiliary male thread 112 faces the associated loading flank 111d of the main male thread 111. Each loading flank 112d of the auxiliary male thread 112 faces the associated stabbing flank 111c of the main male thread 111.

Each stabbing flank 112c and each loading flank 112d of the auxiliary male thread 112 are inclined toward opposite directions. That is, the flank angles of each stabbing flank 112c and each loading flank 112d are larger than 0 degrees, i.e. are positive angles. Flank angle as used herein is the angle formed by a plane perpendicular to the pipe axis CL and the stabbing flank 112c or loading flank 112d. In FIG. 2, the flank angle of each stabbing flank 112c is determined to be positive if it is a positive counterclockwise angle, while the flank angle of each loading flank 112d is determined to be positive if it is a positive clockwise angle.

In a longitudinal cross section of the pin 10 (i.e. cross section containing the pipe axis), the flank angle θ111c of the stabbing flank 111c of the main male thread 111 and the flank angle θ112d of the loading flank 112d of the auxiliary male thread 112 are larger than 0 degrees, i.e. are positive angles. Although not shown, the flank angle of the loading flank 111d of the main male thread 111 is smaller than 0 degrees, i.e. is a negative angle. The flank angle of the stabbing flank 112c of the auxiliary male thread 112 is larger than 0 degrees i.e. is a positive angle. Although not limiting, the absolute value of the flank angle of the loading flank 111d is smaller than the absolute value of the flank angle of the stabbing flank 112c.

In a longitudinal cross section, the female thread portion 21 includes a plurality of thread crest surfaces 21a, a plurality of thread root surfaces 21b, a plurality of stabbing flanks 21c, and a plurality of loading flanks 21d. An auxiliary thread root 21e is formed in a thread crest of the female thread portion 21.

A thread crest surface 21a, thread root surface 21b, stabbing flank 21c and loading flank 21d of the female thread portion 21 face a thread root surface 111b, thread crest surface 111a, stabbing flank 111c and loading flank 111d, respectively, of the main male thread 111. An auxiliary thread root 21e of the female thread portion 21 receives a thread crest of the auxiliary male thread 112.

When the connection has been made up, a thread crest surface 21a and loading flank 21d of the female thread portion 21 are in contact with a thread root surface 111b and loading flank 111d, respectively, of the main male thread 111. Thread crest surfaces 112a, stabbing flanks 112c and loading flanks 112d of the auxiliary male thread 112 are in contact with the bottom surface and a side wall of the auxiliary thread root 21e of the female thread portion 21.

The width W2 of the auxiliary thread root 21e on the thread crest of the female thread portion 21 is slightly smaller than the width W1 of the auxiliary male thread 112. For a thread tooth of the female thread portion 21, the length L21 in the pipe-axis direction between the stabbing flank 21c and the associated side wall of the auxiliary thread root 21e is slightly larger than the length L11 in the pipe-axis direction between the stabbing flank 111c of the main male thread and the loading flank 112d of the auxiliary male thread 112. Further, for a thread tooth of the female thread portion 21, the length L22 in the pipe-axis direction between the loading flank 21d and the associated side wall of the auxiliary thread root 21e is slightly larger than the length L12 in the pipe-axis direction between the loading flank 111d of the main male thread and the stabbing flank 112c of the auxiliary male thread 112. This construction will allow the auxiliary male thread 112 to be engaged with an interference fit to the female thread portion 21, thus increasing the strength of engagement between the thread portions, i.e. male thread portion 11 and female thread portion 21.

### (Effects of the Embodiments)

Thus, in the threaded connection 1 according to the present embodiment, an auxiliary male thread 112 is provided on the thread root of the main male thread 111, the auxiliary male thread having a thread crest width and thread crest height smaller than those of the main male thread 111. When the connection has been made up, the thread crest of the auxiliary male thread 112 is received by the auxiliary thread root 21e of the female thread portion 21. This will make the area of engagement between the male and female threads 11 and 21 larger than that with conventional buttress threads, thereby providing higher torque resistance.

Further, according to the present embodiment, the thread crest width and thread root width of the main male thread 111 of the male thread portion 11 and the thread crest width and thread root width of the female thread portion 21 corresponding to the male thread portion 11 are constant along the entire thread portion. This will allow the threads to be machined in a shorter time than wedge threads. This will reduce manufacturing costs.

According to the present embodiment, the width W2 of the auxiliary thread root 21e of the female thread portion 21 receiving the auxiliary male thread 112 is slightly smaller than the width W1 of the thread crest of the auxiliary male thread 112. In a thread tooth of the female thread portion 21, the length L21 in the pipe-axis direction between the stabbing flank 21c and the loading flank 21f of the auxiliary thread root 21e (i.e. side opposite to the stabbing flank 21c) is slightly larger than the length L11 in the pipe-axis direction between the stabbing flank 111c of the main male thread and the loading flank 112d of the auxiliary male thread 112. Further, in a thread tooth of the female thread portion 21, the length L22 in the pipe-axis direction between the loading flank 21d and the stabbing flank 21g of the auxiliary thread root 21e (side opposite to the loading flank 21d) is slightly larger than the length L12 in the pipe-axis direction between the loading flank 111d of the main male thread and the stabbing flank 112c of the auxiliary male thread 112. This will allow the auxiliary male thread 112 and the female thread portion 21 to be engaged with an interference fit, thus increasing the strength of engagement between the thread portions. This will further improve torque resistance.

As discussed above, according to the present embodiment, the auxiliary male thread 112 is provided in the male thread portion 11 such that the area of engagement and the strength of engagement between the thread portions are increased. Thus, even when an external pressure is applied to the thread portions, the external pressure is prevented from penetrating between the thread portions and through the seal. This will improve sealing performance against an external pressure.

### EXAMPLES

To verify the effects of the threaded connection for steel pipe according to the present disclosure, numerical simulation analyses by the elasto-plastic finite element method were conducted.

### [Test Conditions]

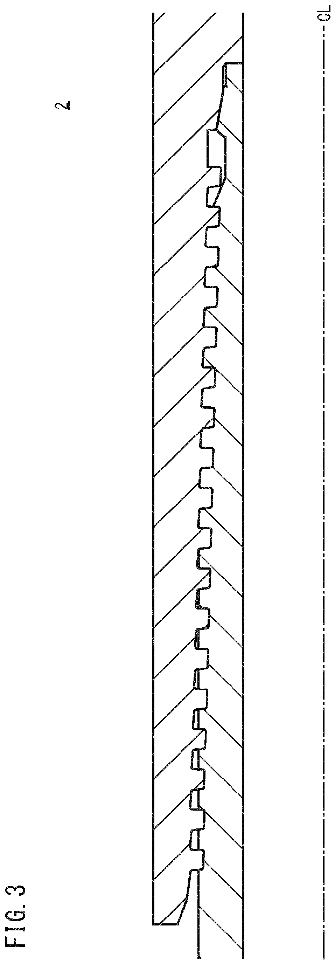

To provide an inventive example, a model of the threaded connection 1 having an auxiliary male thread 112 on the thread root of the main male thread 111 was created (FIG. 1). To illustrate a conventional technique for comparison (comparative example), a model of a threaded connection 2 with buttress threads was created (FIG. 3). The threaded connection 2 of the comparative example had the same construction as the threaded connection 1 of the inventive example except for the absence of the auxiliary male thread 112. The size of the steel pipes was 5" 18# (pipe-body outer diameter: 127.00 mm; pipe-body inner diameter: 108.61 mm), and the material was API carbon steel, P110 (nominal yield stress (YS): 758 MPa).

### [Evaluation Method]

During analysis, the torque resistance of each of the created models was evaluated by causing the shoulders 13 and 23 of the pin 10 and box 20 to contact each other and then increasing tightening turns, determining the point at which the slope of the line representing tightening torque changes and, with yield torque defined as the torque at that point, using the value of yield torque to evaluate torque resistance. Further, the sealing performance of each of the created models was evaluated by determining the minimum seal contact force obtained under load conditions simulating the ISO 13679, series A test (minimum seal contact force).

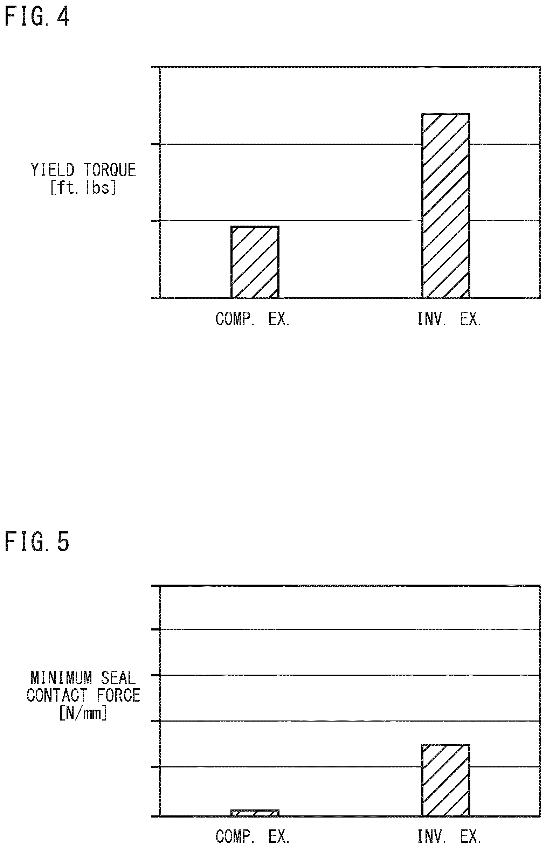

FIGS. 4 and 5 show the obtained yield torques and minimum seal contact forces. As shown in FIGS. 4 and 5, the yield torque and minimum seal contact force of the threaded connection 1 of the inventive example (FIG. 1) are significantly larger than those of the threaded connection 2 of the comparative example (FIG. 3). This demonstrates that providing the auxiliary male thread 112 on the thread root of the main male thread 111 significantly improves torque resistance and sealing performance.

### [Specification of Ranges]

It is preferable to provide a certain amount of longitudinal cross-sectional area of a thread tooth of the auxiliary male thread 112. This is because that will increase the contact area between the thread portions when the connection has been made up and, at the same time, significantly improve torque resistance over conventional techniques. This also applies to external-pressure sealing performance, discussed above. The present embodiment suggests that, to improve external-pressure sealing performance, it is desirable that the longitudinal cross-sectional area S1 of a thread tooth of the auxiliary male thread 112 be equal to or larger than 15 % of the longitudinal cross-sectional area S2 of a thread tooth of the main male thread 111. However, an excessively large longitudinal cross-sectional area S1 of a thread tooth of the auxiliary thread 112 may cause problems when producing and making up the thread portions; accordingly, the longitudinal cross-sectional area S1 of a thread tooth of the auxiliary male thread 112 is not larger than 40 % of the longitudinal cross-sectional area S2 of a thread tooth of the main male thread 111. As shown in FIG. 2, the longitudinal cross-sectional area S1 of a thread tooth of the auxiliary male thread 112 is the area enclosed by the outer profile of a thread tooth of the auxiliary male thread 112 and a line L connecting the thread roots 111b in a longitudinal cross section of a thread tooth of the auxiliary male thread 112. Further, as shown in FIG. 2, the longitudinal cross-sectional area S2 of a thread tooth of the main male thread 111 is the area enclosed by the outer profile of a thread tooth of the main male thread 111 and a line L connecting the thread roots 111b in a longitudinal cross section of a thread tooth of the main male thread 111.

### EXPLANATION OF CHARACTERS

1: threaded connection for steel pipe
10: pin
11: male thread portion
111: main male thread
111c: stabbing flank
111d: loading flank
112: auxiliary male thread
112c: stabbing flank
112d: loading flank
20: box
21: female thread portion

## Claims

1. A threaded connection for steel pipe comprising:
a tubular pin including a male thread portion on an outer periphery; and
a tubular box including, on an inner periphery, a female thread portion corresponding to the male thread portion and adapted to be made up on the pin,
wherein the male thread portion includes a main male thread constituted by a trapezoidal thread having a constant thread crest width and a constant thread root width, and an auxiliary male thread located on a thread root of the main male thread and having a thread crest width and a thread crest height that are smaller than the thread crest width and the thread crest height of the main male thread,
each of the main male thread and the auxiliary male thread has a stabbing flank and a loading flank located opposite to the stabbing flank, and,
in a cross section containing a pipe axis of the pin, a flank angle of the stabbing flank of the main male thread and a flank angle of the loading flank of the auxiliary male thread at adjacent locations are larger than 0 degrees.

2. The threaded connection for steel pipe according to claim 1, wherein a thread tooth of the auxiliary male thread has a longitudinal cross-sectional area of 15 to 40 % of a longitudinal cross-sectional area of a thread tooth of the main male thread adjacent to the auxiliary male thread.
